(19)

Europäisches Patentamt

European Patent Office

Office européen des brevets

(11) **EP 3 001 312 B1**

(12) **EUROPEAN PATENT SPECIFICATION**

(45) Date of publication and mention
of the grant of the patent:
**27.02.2019 Bulletin 2019/09**

(51) Int Cl.:
**G06F 8/41** (2018.01)     **G06F 11/30** (2006.01)
**G06F 11/34** (2006.01)     **G06F 11/36** (2006.01)

(21) Application number: **14186595.6**

(22) Date of filing: **26.09.2014**

(54) **Method, device and computer program product for detecting data dependencies within a program**

Verfahren, Vorrichtung und Computerprogrammprodukt zur Erkennung von Datenabhängigkeiten in einem Programm

Procédé, dispositif et produit de programme informatique permettant de détecter des dépendances de données dans un programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.03.2016 Bulletin 2016/13**

(73) Proprietor: **Technische Universität Darmstadt 64289 Darmstadt (DE)**

(72) Inventors:
• **Jannesari, Ali**
  **52066 Aachen (DE)**
• **Li, Zhen**
  **52062 Aachen (DE)**
• **Wolf, Felix**
  **52070 Aachen (DE)**
• **Gottschlich, Wolfram Michael**
  **77971 Kippenheim (DE)**

(74) Representative: **2K Patentanwälte Blasberg Kewitz & Reichel**
  **Partnerschaft mbB**
  **Schumannstrasse 27**
  **60325 Frankfurt am Main (DE)**

(56) References cited:
• ZHEN LI ET AL: "Discovery of Potential Parallelism in Sequential Programs", 2013 42ND INTERNATIONAL CONFERENCE ON PARALLEL PROCESSING, 1 October 2013 (2013-10-01), pages 1-10, XP055099187, DOI: 10.1109/ICPP.2013.119 ISBN: 978-0-76-955117-3

• HYOYOUNG KIM ET AL: "CUBIT: Compact Bitmap Profling for Dynamic Data Dependence Analysis", PROCEEDINGS OF THE 2013 RESEARCH IN ADAPTIVE AND CONVERGENT SYSTEMS ON, RACS '13, 1 October 2013 (2013-10-01), pages 63-68, XP055180609, New York, New York, USA DOI: 10.1145/2513228.2513272 ISBN: 978-1-45-032348-2

• HONGTAO YU ET AL: "Multi-slicing: a compiler-supported parallel approach to data dependence profiling", PROCEEDINGS OF THE 2012 INTERNATIONAL SYMPOSIUM ON SOFTWARE TESTING AND ANALYSIS, ISSTA 2012, 15 July 2012 (2012-07-15), pages 23-33, XP055180530, New York, New York, USA DOI: 10.1145/2338965.2336756 ISBN: 978-1-45-031454-1

• CEZE L ET AL: "Bulk Disambiguation of Speculative Threads in Multiprocessors", COMPUTER ARCHITECTURE, 2006. 33RD INTERNATIONAL SYMPOSIUM ON BOSTON, MA, USA 17-21 JUNE 2006, PISCATAWAY, NJ, US, 17 June 2006 (2006-06-17), pages 227-238, XP010925397, DOI: 10.1109/ISCA.2006.13 ISBN: 978-0-7695-2608-9

**(Cont. next page)**

- **RAJESHWAR VANKA ET AL: "Efficient and accurate data dependence profiling using software signatures", PROCEEDINGS OF THE TENTH INTERNATIONAL SYMPOSIUM ON CODE GENERATION AND OPTIMIZATION, CHO '12, 31 March 2012 (2012-03-31), pages 186-195, XP055179960, New York, New York, USA DOI: 10.1145/2259016.2259041 ISBN: 978-1-45-031206-6**
- **MINJANG KIM ET AL: "SD3: A Scalable Approach to Dynamic Data-Dependence Profiling", MICROARCHITECTURE (MICRO), 2010 43RD ANNUAL IEEE/ACM INTERNATIONAL SYMPOSIUM ON, IEEE, PISCATAWAY, NJ, USA, 4 December 2010 (2010-12-04), pages 535-546, XP031855546, ISBN: 978-1-4244-9071-4**
- **K-F FAXEN ET AL: "Embla - Data Dependence Profiling for Parallel Programming", COMPLEX, INTELLIGENT AND SOFTWARE INTENSIVE SYSTEMS, 2008. CISIS 2008. INTERNATIONAL CONFERENCE ON, IEEE, PISCATAWAY, NJ, USA, 4 March 2008 (2008-03-04), pages 780-785, XP032392639, DOI: 10.1109/CISIS.2008.52 ISBN: 978-0-7695-3109-0**

**Description**

**Field of the invention:**

The invention relates to a method of determining at least one data dependence within a program, a data-dependence detection device for detecting data dependences in a program and a corresponding computer program product.

**Background of the invention:**

Data-dependence analysis forms the basis of many program analysis tools, such as parallelization assisting tools and data-race detectors. Traditionally, data-dependence analysis has been performed statically at compile time. A main disadvantage of static data-dependence analysis is that it cannot deal with pointers, dynamically calculated array indices, and dynamic allocation, because the address and even the size of dynamically allocated memory space can only be determined at runtime. Thus, static data-dependence analysis is generally too conservative due to a lack of runtime information.

In contrast, dynamic data-dependence profiling resolves memory addresses and data dependences at runtime. The traditional algorithm suffers from significant time and memory overhead. The algorithm maintains a separate status (or shadow word) of every memory location that is accessed in the program, which usually costs more memory than the program originally consumes.

The most successful and important approach to lower the memory overhead of dynamic data-dependence profiling is $SD^3$. $SD^3$ tries to compress memory accesses by expressing a number of regular memory accesses in a single formula. Although $SD^3$ has achieved an impressive result on lowering memory overhead, it increases the time overhead significantly (289x slowdown on average, 845x slowdown in the worst case).

On the other hand, existing approaches to lower the time overhead of dynamic data-dependence profiling lose either accuracy or detailed information. Instead of recording all the memory accesses, it is, for example, tried to record only some of them, which is called sampling, then infer the data dependences based on partially recorded data and a corresponding mathematical model. Unfortunately, such approaches suffer a significant accuracy drain. Another approach, which has a smaller overhead compared to other tools, records only the critical path instead of detailed pairwise data dependences. Although it is considered to be fast, it lacks the ability to provide detailed dependence information, which can be useful in assisting parallelization.

ZHEN LI et AL: "Discovery of Potential Parallelism in Sequential Programs", 42"d International Conference on Parallel Processing, pages 1004-1013, DOI 10,1109/1CPP.2013.119 ISBN: 978-0-76-955117-3 discloses a dynamic approach to the discovery of potential parallelism in sequential programs, which rests on the notion of computational units. Recommendations on how to parallelize the program are derived on-the-fly from a trace-representation of their dependences in Foata normal form.

HYOYOUNG KIM ET AL: "CUBIT: Compact Bitmap Profling for Dynamic Data Dependence Analysis", PROCEEDINGS OF THE 2013 RESEARCH IN ADAPTIVE AND CONVERGENT SYSTEMS ON, RACS 13, 1 October 2013 (2013-10-01), pages 63-68, New York, New York, USA DOI: 10.1145/2513228.2513272, ISBN: 978-1-45-032348-2.

By using bitmap profiling, the two major weaknesses of dynamic data dependence analysis are reduced, Bitmap profiling stores memory accesses as a bit pattern rather than whole addresses-Dynamic data dependence analysis with a bitmap representation also effectively reduces time overhead. Bitwise logical operations are very useful to perform set operations on sets represented with bitmaps. Moreover, bitmap representation easily allows to use SIMD operations for bitwise logical operations.

HONGTAO YU ET AL: "Multi-slicing: a compiler-supported parallel approach to data dependence profiling", PROCEEDINGS OF THE 2012 INTERNATIONAL SYMPOSIUM ON SOFTWARE TESTING AND ANALYSIS, ISSTA 2012, 15 July 35 2012 (2012-07-15), pages 23-33, New York, New York, USA DOI:10.1145/2338965.2336756 ISBN: 978-1-45-031454-1 disclose in particular, the parallel execution schemes based on alias partitioning and edge partitioning reduce both the memory and the time requirement, making data dependence profiling much more feasible for practical application.

**Summary of the invention:**

An objective of the present invention is to provide an improved method, data-dependence detection device and computer program product of detecting data dependences. The present invention aims to lower the memory overhead of dynamic data-dependence profiling without increasing its time overhead or significantly loosing accuracy or the ability to provide detailed information.

This objective is achieved by a method as claimed in claim 1, by a data-dependence detection device as claimed in claim 11, and by a computer program product as claimed in claim 13.

In a first aspect a method of determining at least one data dependence within a program is presented, the method comprising the steps of:

- determining at least one control region within the program;
- executing the program;
- determining a type of data dependence by means of the steps of

  ◦ detecting a first variable within a first control region;
  ◦ assigning a first slot of a read signature and a corresponding first slot of a write signature to the first variable, wherein the signatures can be represented by an array and the slots are fields of the array and a hash function is used to map the memory address of the first variable to the slots;
  ◦ determining a first line number of a first program line of a first memory access of the program, wherein the first memory access being related to the first variable;
  ◦ checking whether the first memory access is a read operation or a write operation for updating a record in case of a read operation in the assigned slot of the read signature or in case of a write operation in the assigned slot of the write signature, including the first line number of the first program line of the memory access of the first variable;
  ◦ determining a data dependence, being a conflict if two or more operations accessing the same variable in a certain order, by checking the records being recorded in the first slot of the read signature or the first slot of the write signature and the result of the check of the first memory access;

- recording in a memory device when determining a data dependence whether the type of data dependence is a read-after-write dependence, write-after-read dependence or write-after-write dependence and the line numbers of the program lines of the memory accesses for the determined data dependence;
- updating the read signature or the write signature with the record in accordance with the result of the check of the first memory access;
- determining whether the first variable is a first local variable being assigned to the first control region;
- releasing the first slot of the read signature and the corresponding first slot of the write signature assigned to the first variable if the first variable is the first local variable and if an end of the first control region is passed during execution of the program.

The method of data-dependence detection obviously works also without the steps of

- determining at least one control region within the program;
- determining whether the first variable is a first local variable being assigned to the first control region;
- releasing the first slot of the read signature and the corresponding first slot of the write signature assigned to the first variable if the first variable is the first local variable if an end of the first control region is passed during execution of the program

These three steps are related to the use of local variables. Using the read signature and the write signature already improves the performance of data dependence detection in comparison to the traditional approaches. The number of variables of a program depends on the size of the program. The number may vary between several hundreds for small programs to several thousands or even million of variables if arrays are used within the program. It may thus be an advantage of the proposed method to use signatures in order to record memory accesses and reduce memory overhead. In addition, the method differentiates between global and local variables used in the program in order to limit the number of slots of the signatures and thus the memory needed to store memory accesses. Slots of local variables are cleaned after leaving the region of the program for which the local variable is valid. The local variable is only used in the corresponding region of the program. The slot or a number of slots of the signatures may thus be reused in the next region for another local variable. Using local and global variables for determining data dependences reduces the memory needed to record data dependences without compromising accuracy by reusing memory resources temporarily assigned to local variables. The size of the read signature and the write signature may for example be reduced. Because of the described method it is not necessary to provide a separate slot in the read and the write signature for each variable of the program.

Local variables are determined within so called control regions. One option to determine control regions may be to determine control dependences. A look-ahead technique may be used to determine a re-convergence point when a branch is encountered. The re-convergence point is the point where the different branch alternatives of the program end and unconditional execution resumes. Before the real branch is executed, every possible branch is tried first, and this look-ahead is terminated when a re-convergence point is encountered, which is the first instruction that comes after a control region. The re-convergence point is searched for in "look-ahead" mode. This means, while searching, all instrumentation related to memory accesses is disabled and all intermediate values and program states are stored separately on a scratchpad. After following all branches up to the re-convergence point, the real branch is executed in normal mode. The look ahead technique is especially suited for the detection of control regions if only binary code is available. Further details about the detection of control regions can be found in the European patent application with the application number EP 13179316.8 and the title "Method and parallelization detection device for detecting parallelism in a sequential program".

An alternative and possibly simpler approach to determine the control regions may be used when the source code of a program is available. The source code is traversed and all control regions are recorded by determining branches of the program and the corresponding re-convergence points by means of the corresponding program instructions. This is like reading the file and log important things down. The latter can be done on the run, meaning during execution on the program the control regions may thus be identified during execution of the program. Anyhow, control regions may also be determined independently from executing the program as described above.

Data dependences are preferably recorded by storing the type of data dependence and the line numbers or an equivalent characterization of the memory accesses which are involved in the data dependence. A preferred presentation of data dependences may be a triple comprising the <Dependent-Line, Dependence-Type, Depends-On-Line>.

Recording data dependences is especially useful and necessary for determining the data structure of a program and options of parallelizing the program. One can distinguish four types of data dependences: true dependences (read-after-write or short RAW), antidependences (write-after-read or short WAR), output dependences (write-after-write or short WAW) and input dependences (read-after-read or short RAR). Read-after-read dependences are not relevant to or do not influence parallelization. It is therefore not necessary to record RAR dependences. Anyhow, for different purposes it may be useful to record these dependences as well. The method would follow in this case the same way as described above and in the subsequent description.

According to a preferred embodiment the method may be characterize in that the steps of determining and recording the type of data dependence are performed by a worker thread, and the method comprises the steps of:

- checking whether the write signature comprises a record of a second line number in the first slot if the first memory access is a read operation;
- writing a first information or information item to a memory device if the first slot of the write signature comprises the second line number, wherein the first information comprises information regarding the first line number, the second line number and that a read operation has been performed after a write operation;
- writing the first line number in the first slot of the read signature if the first memory access is a read operation;
- checking whether the write signature comprises a record of a third line number in the first slot if the first memory access is a write operation;
- writing a second information to the memory device if the first slot of the write signature comprises the third line number, wherein the second information comprising information regarding the first line number, the third line number and that a write operation has been performed after a write operation;
- writing the first line number in the first slot of the write signature if the first memory access is a write operation;
- checking whether the read signature comprises a record of a fourth line number in the first slot if the first memory access is a write operation;
- writing a third information to the memory device if the first slot of the read signature comprises the fourth line number, wherein the third information comprising information regarding the first line number, the fourth line number and that a write operation has been performed after a read operation;
- writing the first line number in the first slot of the write signature if the first memory access is a write operation.

The first, second and third information comprise at least three information items and are called triples. The triples comprise the two line numbers of the program code which are involved in the memory access and the type of memory access. The approach described above uses the so-called membership check because the members of both the read and the write signature are checked. An alternative would be performing membership check and disambiguation whenever a write operation occurs, since read-after-read (RAR) dependences do not prevent parallelization. Since disambiguation usually incurs a bigger overhead than the membership check does, data dependences are preferably built using membership check whenever possible. The worker thread may be a device or program code executed on a processor which determines and records the triples as described above.

According to another preferred embodiment the method may comprise the further steps of:

- checking if a fourth information is identical with one of the first information, second information or third information;
- discarding the fourth information if the fourth information is identical with one of the first information, second information or third information.

Redundant or identical data dependences are merged in order to avoid memory overhead. Such redundancies may be caused by loops and functions that will be executed many times. Checking and discarding may be performed on the run before storing the fourth information in order to reduce the number of data dependences written to the memory device which may be, for example a disk. The alternative approach of comparing the triples in a final step after recording all data dependences may cause too much memory overhead.

The method may comprise according to another preferred embodiment the additional step of:

- determining a size of a read signature and a size of write signature based on a number of variables used within the program prior to the execution of the program.

The size of the signatures may be estimated by means of the type of program and the size of the program. The chosen size of the signature may in this case be chosen in accordance with reference values which were determined in the past. Short signatures may provide less accuracy because there may be variables which cannot be assigned to a slot after all slots have been assigned. Experienced based signatures may thus often comprise much more slots than necessary. This may cause unnecessary memory overhead. It may thus be advantageous to count the variables either in a static way or during execution of the program. Executing the program may provide more accurate data with respect to the number of variables and the resulting length of the read signature and the write signature.

The method may comprise according to another preferred embodiment the additional step of:

- separating a main memory available for executing the program into at least a first sub-memory and a second sub-memory prior to the execution of the program.

The main memory may be comprised by the memory device or may alternatively be located in a different memory unit. There may be 3, 4, 5 or more sub-memories.

Different variables are usually stored in different sections of a memory. The separation of the main memory which comprises all variables stored for running the program thus enables to perform the analysis of data dependences in parallel in each sub-memory. The steps of

- determining a type of data dependence by means of the steps of

  ◦ detecting a first variable within a first control region;
  ◦ assigning a first slot of a read signature and a corresponding first slot of a write signature to the first variable;
  ◦ determining a first line number of a first program line of a first memory access of the program, wherein the first memory access being related to the first variable;
  ◦ checking whether the first memory access is a read operation or a write operation;
  ◦ determining the type of data dependence based on records being recorded in the first slot of the read signature or the first slot of the write signature and the result of the check of the first memory access;

- recording in a memory device whether the type of data dependence is a read-after-write dependence, write-after-read dependence or write-after-write dependence;
- determining whether the first variable is a first local variable being assigned to the first control region;
- releasing the first slot of the read signature and the corresponding first slot of the write signature assigned to the first variable if the first variable is the first local variable if an end of the first control region is passed during execution of the program,

may be performed in parallel for each sub-memory in order to accelerate the analysis.

Again it is obvious that the steps of

- determining at least one control region within the program;
- determining whether the first variable is a first local variable being assigned to the first control region;
- releasing the first slot of the read signature and the corresponding first slot of the write signature assigned to the first variable if the first variable is the first local variable if an end of the first control region is passed during execution of the program

within each of the parallel branches of the method which are related to local variables are not necessary to perform the parallelization approach. The parallelized method would work without the detection of local variables. The read signature and write signature have to be extended in this case because local variables would not be discarded and the corresponding slot would not be released such that more slots are needed. This consequence also applies to the more sophisticated parallelization approach using sub-worker threads as discussed below.

The sub memories may be chosen independently from whether all local variables of one control region are stored to the same sub-memory. There is no need to determine memory regions assigned to one, two or more control regions in order to determine the data dependences and record for example the triples in the memory device. Furthermore, the location of the memory used for storing a local variable does not interfere with the fact that the variable is a local variable such that the length of the read signature and write signature assigned to the first sub-memory and the length the read signature and write signature assigned to the second sub-memory can be reduced in the same way as in the case of only one main memory. The total length of the read signature and write signature assigned to the first sub-memory and the length the read signature and write signature assigned to the second sub-memory are each shorter than a read signature and write signature assigned to the complete main memory because the number of variables and corresponding memory accesses recorded by means of the signatures assigned to a sub-memory can be estimated by the total number of variables divided by the number of sub-memories.

The worker thread comprises according to another embodiment at least a first sub-worker thread assigned to the first sub-memory for evaluating memory accesses to the first sub-memory; and a second sub-worker thread assigned to the second sub-memory for evaluating memory accesses to the second sub-memory.

The first sub-worker thread and the second sub-worker thread may analyze the data dependences being related to the respective first and second sub-memory in the same way as described above with respect to the worker thread. Two, three, four, five or more sub-worker threads enable to record data dependences of one program in a parallelized approach. The parallelized approach may reduce the time needed to record all data dependences.

The method may comprise according to another preferred embodiment the additional steps of:

- storing by means of a main thread a memory access to the first sub-memory in a first chunk assigned to the first sub-memory during execution of the program; and
- storing by means of the main thread a memory access to the second sub-memory in a second chunk assigned to the second sub-memory during execution of the program.

The main worker thread may be used to prepare the analysis of data dependences to be performed by the sub-worker threads by sorting memory accesses according to which sub-memory they reference. The first chunk and the second chunk are containers with a predefined data capacity.

The worker thread may comprise at least a first sub-worker thread assigned to the first sub-memory for evaluating memory accesses stored in the first chunk; and a second sub-worker thread assigned to the second sub-memory for evaluating memory accesses stored in the second chunk.

The chunks are loaded by means of the main thread and assigned to the respective sub-worker thread. The respective sub-worker thread fetches and unpacks a corresponding chunk from the queue and subsequently performs the analysis of the data dependences by determining triples as described above. The information written to the memory device by means of each sub-worker thread may be controlled on the run in order to determine redundant information which may be caused, for example, by loops as discussed above. The information may be merged by discarding the redundant information in order to minimize overhead memory.

The method may comprise according to another preferred embodiment the additional steps of:

- comparing fifth information written by the first sub-worker thread with sixth information written by the second sub-worker thread;
- deleting the sixth information written by the second sub-worker thread if the sixth information written by the second sub-worker thread is identical with the fifth information written by the first sub-worker thread.

Data dependences recorded by the different sub-worker threads may be compared and merged by discarding the redundant information in order to minimize overhead memory. The revised final data dependences are recorded by means of the memory device.

The worker thread may comprise $N \geq 2$ sub-worker threads. The method may comprise in an alternative embodiment the additional step of:

- determining a size of a read signature and a size of write signature assigned to a sub-worker thread based on a number of variables used within the program and the number N of sub-worker threads prior to the execution of the program.

The approach as already mentioned above may be to divide the length of the signature determined for only one worker thread by the number of sub-worker threads N. It may be necessary to provide an extension to the read signature and write signature assigned to the respective sub-worker thread in order to balance the differences in the program codes accessing the respective sub-memories. In a more sophisticated approach the sub-memories may be chosen by taking into account the instructions initiating data access. It may in this case be possible to choose sub-memories in a way that the corresponding read signatures and write signatures do have the same length or adapting the size of the signatures to the respective sub-memories.

According to a further aspect of the present invention a data-dependence detection device for detecting data dependences in a program is presented. The data-dependence detection device comprising at least one processing device and at least one memory device, the processing device comprising at least one control-region detection device being adapted to determine at least one control region within the program, the processing device comprising at least one execution device being adapted to execute the program, the processing device comprising a dependence detector, the dependence detector being adapted to detect a first variable within a first control region, the dependence detector being further adapted to assign a first slot of a read signature and a corresponding first slot of a write signature to the first variable, wherein the read signature and the write signature are recorded in the memory device, wherein the signatures can be represented by an array and the slots are fields of the array and a hash function is used to map the memory address of the first variable to the slots, the dependence detector being further adapted to determine a first line number of a first program line of a first memory access of the program, wherein the first memory access being related to the first variable, the dependence detector being adapted to check whether the first memory access is a read operation or a write operation for updating a record in case of a read operation in the assigned slot of the read signature or in case of a write operation in the assigned slot of the write signature, including the first line number of the first program line of the memory access of the first variable, the dependence detector being adapted to determine a data dependence, being a conflict if two or more operations accessing the same variable in a certain order, by checking the records being recorded in the first slot of the read signature or the first slot of the write signature and the result of the check of the first memory access, the processing device comprising a recorder being adapted to record in the memory device when determining a data dependence whether the type of data dependence is a read-after-write dependence, write-after-read dependence or write-after-write dependence. and the line numbers of the program lines of the memory accesses for the determined data dependence. The processing device comprises an updater being adapted to update the read signature or the write signature in accordance with the result of the check of the first memory access. The processing device comprising an assignment detector being adapted to determine whether the first variable is a first local variable being assigned to the first control region, and the processing device comprising a releasing device being adapted to release the first slot of the read signature and the corresponding first slot of the write signature assigned to the first variable if the first variable is the first local variable if an end of the first control region is passed during execution of the program.

The data-dependence detection device according to another embodiment may comprise a worker thread. The worker thread being adapted to perform the functions of the dependence detector and the recorder, the worker thread being adapted to:

- check whether the write signature comprises a record of a second line number in the first slot if the first memory access is a read operation;
- write a first information to the memory device if the first slot of the write signature comprises the second line number, wherein the first information comprising information regarding the first line number, the second line number and that a read operation has been performed after a write operation;
- write the first line number in the first slot of the read signature if the first memory access is a read operation;
- check whether the write signature comprises a record of a third line number in the first slot if the first memory access is a write operation;
- write a second information to the memory device if the first slot of the write signature comprises the third line number, wherein the second information comprising information regarding the first line number, the third line number and that a write operation has been performed after a write operation;
- write the first line number in the first slot of the write signature if the first memory access is a write operation;
- check whether the read signature comprises a record of a fourth line number in the first slot if the first memory access is a write operation;
- write a third information to the memory device if the first slot of the read signature comprises the fourth line number, wherein the third information comprising information regarding the first line number, the fourth line number and that a write operation has been performed after a read operation;
- write the first line number in the first slot of the write signature if the first memory access is a write operation.

The processing device may be one processor or a combination of two or more processors which are adapted to perform one ore more functions of the control-region detection device, execution device, dependence detector, recorder, assignment detector or releasing device. The processing device may alternatively or in addition comprise specialized circuit arrangements in order to perform one or more of the functionalities of the control-region detection device, execution device, dependence detector, recorder, assignment detector or releasing device. The memory device may comprise one memory unit or two or more different memory units wherein the memory units may be RAM, disc drives, SSD or memory units realized by any suitable technology. The processing device and memory device may be operated by means of a dedicated computer program enabling the described functionalities of the control-region detection device, execution device, dependence detector, recorder, assignment detector or releasing device.

The processing device may optionally comprise a discarding device for discarding redundant information.

In another aspect of the present invention a computer program product stored on a computer-readable medium or downloaded from a network is presented, the computer program product comprises code means for producing the steps of the method as claimed in any of claims 1 - 10 when run on the accordingly adapted data-dependence detection device of claims 11 or 12.

The method, the data-dependence detection device and the computer program product presented above may have the advantage to lower the memory overhead of dynamic data-dependence profiling without increasing its time overhead or significantly loosing accuracy or the ability to provide detailed information.

It shall be understood that the method of claim 1, the data-dependence detection device of claim 11 and the computer program product of claim 13 have similar and/or identical embodiments, in particular, as defined in the dependent claims.

It shall be understood that a preferred embodiment of the invention can also be any combination of the dependent claims with the respective independent claim.

Further advantageous embodiments are defined below.

**Brief description of the drawings:**

These and other aspects of the invention will be apparent from and elucidated with reference to the embodiments described hereinafter.

The invention will now be described, by way of example, based on embodiments with reference to the accompanying drawings.

In the drawings:

Fig. 1 shows an example of determining data dependences
Fig. 2 shows an embodiment of determining data dependences in parallel
Fig. 3 shows the runtime overhead of determining and merging dependences of the serial profiler
Fig. 4 shows the memory requirements of the signature-based method on NPB programs when EFPR = 1% of the serial profiler
Fig. 5 shows a comparison of slowdown between the signature-based method (sig-based, serial) and the traditional approach (traditional shadow memory)
Fig. 6 shows a comparison of memory consumption between the signature-based method (sig-based, serial) and the traditional approach (traditional shadow memory)
Fig. 7 shows a flowchart of the method of determining data dependences within a program
Fig. 8 shows a principal sketch of a data-dependence detection device

**Detailed description of embodiments:**

Various embodiments of the invention will now be described.

A signature is a data structure that supports the approximate representation of an unbounded set of elements with a bounded amount of state. It is widely used in transactional memory systems to uncover conflicts. A signature usually supports three operations:

- Insertion: A new element is inserted into the signature. The state of the signature is changed after the insertion.
- Membership check: Tests whether an element is already a member of the signature. Since a signature is an approximate representation, the membership check returning true does not always mean the element already exists in the signature. It thus may produce false positives. However, the membership check ensures that the return value of an inserted element must be true. Hence, there are no false negatives.
- Disambiguation: Intersection operation between two signatures. If an element was inserted in both of them, the resulting element must be represented in the resulting intersection.

A data dependence can be regarded as a conflict because it exists only when two or more memory operations access the same memory location in some order. Therefore, a signature is also suitable for detecting data-dependences.

The method adopts the idea of signatures to store memory accesses. A fixed-length array is combined with a hash function that maps memory addresses to array indices. In each slot of the array, we save the source line number where the memory access occurs. A source line may be the smallest unit to index data dependences. Anyhow, variable names may be used in order to index dependences in a finer grain. Because of the fixed length of the data structure, memory consumption can be adjusted as needed.

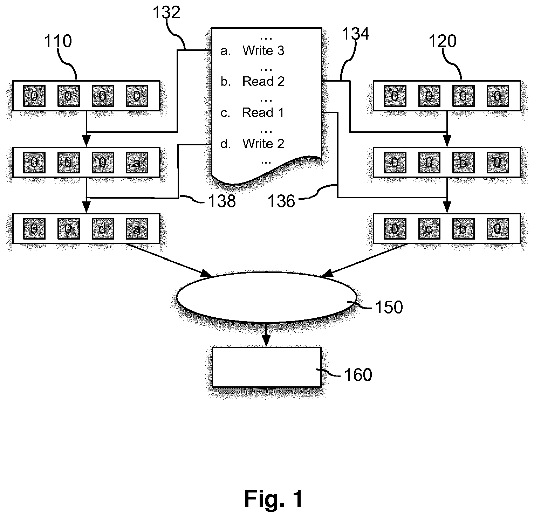

Fig. 1 shows that two signatures are used to detect data-dependences. One read signature 120 for recording read operations and one write signature 110 for write operations. When a memory access c at address x is captured, first the access type (read or write) is obtained. Then, the membership check is run to see whether x exists in the signature of the correspondent type. If x already exists, a data dependence between c and the previous access to x is recorded. Otherwise, x is inserted into the signature. At the same time, a membership check is performed to see whether x exists in the other signature. If yes, data dependence has to be built as well. An alternative would be performing membership check and disambiguation whenever a write operation occurs, since read-after-read (RAR) dependences do not prevent parallelization. The signature size in Fig. 1 is four. Four memory accesses 132, 134, 136, 138 are recorded, including two write and two read accesses. The indices always start from 0 at the left of the write signature 110 and the read signature 120, respectively This means that the first address "3" which is accessed is assigned to the fourth (index 3) slot of the write signature 110. The second address "2" is assigned to the third (index 2) slot of the read signature 120. The third address "1" is assigned to the second (index 1) slot of the read signature 120 etc.. A disambiguation check is performed after the write access 138 to address "2" in step 150. The disambiguation check of the two signatures indicates a conflict at address 2 of the write signature 110 and the read signature 120. In this case, a write-after-read (WAR) dependence must be built in step 160. The full information about this data dependence comprises the line number "d" of the write access 138, which has to be recorded in the write signature 110, the line number "b" of the read access 134 recorded in the read signature 120 and that the data dependence is a write-after-read (WAR) dependence.

A function is inserted at the beginning of the target program to initialize the data structures. Every read and write operation of the target program is instrumented. Since disambiguation usually incurs a bigger overhead than the membership check does, data dependences are preferably built using membership check whenever possible. The overhead of disambiguation is higher than of membership check when the size of the signature is big. The latter is explained by means of the following example. It is assumed that there are two signatures containing N elements each. Disambiguation as defined above finds the intersection of the two signatures, which is a set of all the elements that exist in both signatures. This requires a scan of N elements. On the other hand, membership check finds whether an element exist in one signature. The cost equals to the time spent in calculating the position of one element. Since the size of signature is usually tens or even hundreds of thousand slots, it is preferred to use membership check always instead of disambiguation because the cost of scanning N elements is higher than calculating the position of one element if N is a big number.

Algorithm 1 specifies the membership check stated above.

Global signatures sig_write and sig_read

```
For each memory access c in the program
    index = hash(c)
    If c is write operation then
        If sig_write[index] is empty then
            c is initialization
        Else
            If sig_read[index] is not empty then
                buildWAR()
            Endif
            buildWAW()
        Endif
        sig_write[index] = source line number of c
    Else
        If sig_write[index] is not empty then
            buildRAW()
        Endif
        sig_read[index] = source line number of c
    Endif
```

Algorithm 1: Algorithm of the membership check.

Using signatures may cause the problem that two memory accesses may be mapped onto the same slot of the signature. Although false positives are a basic property of signatures and cannot be completely eliminated, an optimization is applied to lower the false-positive rate.

The main idea is to remove variables from the signature once it is clear that they will never be used again during the remainder of the execution. Thus, a way to monitor the lifetime of a variable is needed. The lifetime of a variable is the time between its allocation and de-allocation. The lifetime of variables has an impact on the correctness of the data-dependence analysis because signature slots of dead variables might be reused for new variables. If this happens, a false dependence will be built between the last access of the dead variable and the first access of the new variable.

To resolve this problem, a variable lifetime analysis is dynamically performed. This means the allocation and de-allocation of variables is observed. In addition, dynamic control-flow information is exploited, which is helpful to determine the

```
int x = 0;        // declare x outside while loop, insert x to signature

while (x < 10) {   // entry of while loop, control region starts
    int y = x + 2;  // declare y inside while loop, insert y to signature
    x++;
}                  // exit of while loop, control region ends

// x alive, y dead, remove y from signature
```

lifetime of local variables allocated inside a control region. Although there is no explicit de-allocation of local variables, they are deallocated once the program leaves the control region where they have been allocated. For this reason, signature slots for local variables can be reused without the danger of building false dependences. Below an example of variable life span is shown and Algorithm 2 shows the algorithm of variable lifetime analysis.

Example of variable life span

Global variable lifetime record R

```
For each instruction i being executed
    If i is the entry of code block B then
        For each variable v locally used in B
            R.add(v, B)
        EndFor
    ElseIf i is the exit of code block B then
        For all the variable v that the pair (v, B) exist in R
            remove v from signatures
            R.remove(v, B)
        EndFor
    ElseIf i is dynamic allocation instruction then
        addr = base address of allocated memory
        s = size of allocated memory
        R.add(addr, s)
    ElseIf i is dynamic de-allocation instruction then
        remove memory block starting from addr and size s from signatures
        R.remove(addr, s)
    EndIf
EndFor
```

Algorithm 2: Algorithm of variable lifetime analysis.

Recording every data dependence may consume an excessive amount of memory. Depending on the size of both the source code and the input data, the size of the file containing identified data dependences can quickly grow to several gigabytes for some programs. However, it has been found that many data dependences are redundant, especially for regions like loops and functions that will be executed many times. Therefore, identical data dependences are merged. This approach significantly reduces the number of data dependences written to disk.

A data dependence is expressed as a triple as already indicated above:

<Dependent-Line, Dependence-Type, Depends-On-Line>.

Two data dependences are identical if and only if each element of the triple is identical. When a data dependence is found, it is checked whether it already exists. If there is no match, a new entry for the dependence is created. Otherwise the new dependence is discarded. For a code region that is executed more than once, only one set of dependences is maintained, merging the dependences that occur across multiple instances. When a parallelism-discovery module reads the dependence file, it still treats these multiple execution instances as one. For example, a loop will always be considered as a whole and its iterations will never be expanded.

The effect of merging data dependences is significant. Previously, the size of the dependence file for the NAS Parallel Benchmarks ranged from 330 MB to about 37 GB with input class W (6.1 GB on average). After introducing runtime data dependence merging, the file size decreased to between 3 KB and 146 KB (53 KB on average), corresponding to an average reduction by a factor of 120,685x.

Anyhow, representing an unbounded set of elements with a bounded amount of state means adding new elements can introduce errors. Due to hash collisions in the signatures, dependences that do not exist in the program may be built (false positives), and dependences that exist in the program may be missed (false negatives). The root causes of false positives and false negatives in dependences are false positives in the signatures. For this reason, the false-positive rate of the signature is estimated as a function of the signature size and the number of elements. It is assumed that one hash function is used, which selects each array slot with equal probability. Let m be the number of slots in the array. Then, the probability that the hash function does not use a slot during insertion is:

$$1 - \frac{1}{m}$$

After inserting n elements, the probability that a certain slot is still unused becomes:

$$\left(1 - \frac{1}{m}\right)^n$$

Now the estimated false-positive rate (EFPR), i.e., the probability that a certain slot is used is:

$$EFPR = 1 - \left(1 - \frac{1}{m}\right)^n$$

Obviously, to control the false-positive rate, adjustment of the size of the signature m to the number of variables n in the program is needed. For example, using a fixed number of slots (800,000) for the NAS Parallel Benchmarks lets the EFPR vary between 0.01% and around 60%, wasting a lot of memory on small programs while not having enough for the big ones. To avoid such a scenario, the user can specify a maximum EFPR that can be tolerated, and the method will choose the size of the signature accordingly. In this way, memory can be used more efficiently and the quality of the final suggestions can be assured.

To calculate the size of signature based on a given EFPR, it is necessary to know the number of variables in the program. To avoid running the program more than once, the number of variables is estimated during instrumentation. The number is counted based on the intermediate representation (IR) of the program produced by the front-end of LLVM. Although the IR is in Static Single Assignment (SSA) form, it allows constants, global variables, named and unnamed variables to be distinguished. Thus, it is easy to define rules that filter out the variables that originated from the program. The rules are relaxed so that the counted number is always bigger than the real number of variables. This will result in a bigger size of the signature, leaving the actual false-positive rate usually below the specified EFPR threshold.

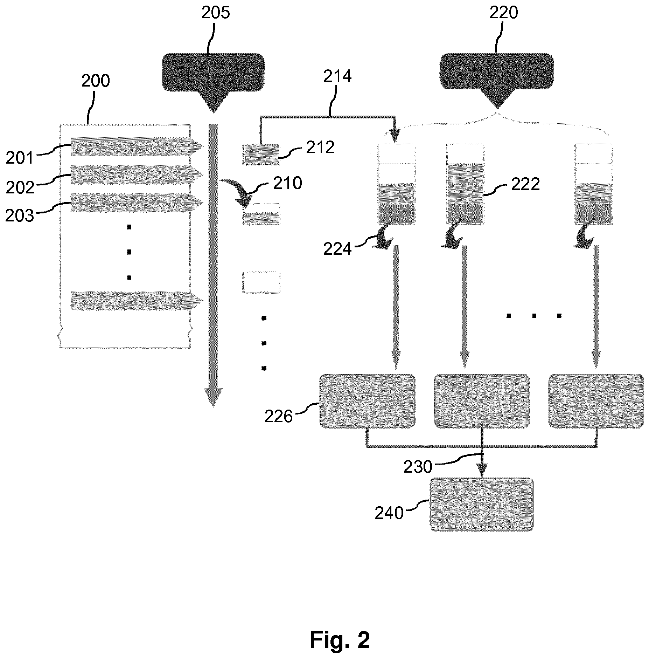

The basic idea to parallelize the method described above is using the Single Program Multiple Data Stream (SPMD) model. More specifically, the analysis method is performed in parallel on different sets of memory accesses. For the concrete implementation, the producer-consumer pattern is applied as depicted in Fig. 2. A main thread 205 executes the target program 200 and plays the role of the producer, collecting and sorting memory accesses 201, 202, 203 in step 210, whereas 1, 2, 3... sub-worker threads 222 which are comprised by worker thread 220 play the role of consumers, consuming and analyzing memory accesses 201, 202, 2013 and reporting data dependences in step 224. To ensure the correctness of the data dependence analysis algorithm, a memory address is assigned to exactly one sub-worker thread 222 and this sub-worker 222 thread is responsible for all accesses to that address. The total memory which may be called main memory is thus divided or separated in sub-memories. Each sub-memory is assigned to a corresponding sub-worker thread 222.

Fig. 2 shows how the parallelized method and data dependence detection device works. The main thread 205 executes the program 200 to be analyzed and collects in step 210 memory accesses 201, 202, 203 in chunks 212 whose size can be changed to provide scalability. And for each sub-worker thread 222, a separate queue to store chunks such as 212 is maintained. A given chunk 212 contains only memory accesses assigned to one sub-worker thread 222. Once a chunk 212 is full, the main thread will push it in step 214 into the queue of the sub-worker thread 222 responsible for the accesses recorded therein. The sub-worker threads 222 in turn will consume chunks from their queue, analyze them, store detected data dependences in step 224 in their own local data structure 226 and finally delete those chunks. At the end, the data from all local data structures is merged in step 230 into a global data structure 240 to remove all duplicated data dependences.

A range of experiments has been conducted to evaluate both the performance of the method and the quality of the data dependences obtained. All experiments ran on a server with 2 x 8-core Intel Xeon E5-2650 2 GHz processors with 32 GB memory, running Ubuntu 12.04 (64-bit server edition). The test cases have been taken from the NAS Parallel Benchmarks (NPB) 3.3.1, a suite of programs derived from real-world computational fluid dynamics applications. All the benchmark programs were compiled with option -g -O0 and the EFPR was always set to 1 %. Whenever possible, different inputs have been tried to compensate for the input sensitivity of the dynamic approach.

Table 1: Overhead when running NAS Parallel Benchmarks.

| Program | Original Time (s) | Slowdown (x) | | | Memory (MB) | | |
|---|---|---|---|---|---|---|---|
| | | Instrument | Serial | Parallel (8T) | Original | Serial | Parallel (8T) |
| BT | 8.21 | 2.89 | 245.07 | 99.56 | 12.91 | 2656.59 | 8126.06 |
| SP | 24.79 | 3.00 | 141.36 | 86.59 | 37.46 | 161.06 | 872.84 |
| LU | 23.36 | 4.12 | 165.24 | 74.41 | 25.73 | 105.21 | 231.00 |
| IS | 0.14 | 7.00 | 234.00 | 135.00 | 36.34 | 580.23 | 261.76 |
| EP | 5.96 | 0.02 | 34.89 | 19.42 | 6.94 | 65.58 | 220.26 |
| CG | 0.90 | 0.79 | 290.93 | 142.43 | 33.65 | 106.33 | 656.56 |
| MG | 1.06 | 12.50 | 223.50 | 119.00 | 229.65 | 289.04 | 225.22 |
| FT | 0.87 | 0.43 | 192.30 | 106.60 | 86.14 | 355.13 | 418.85 |
| Average | 8.16 | 3.84 | 190.91 | 97.88 | 58.60 | 539.90 | 1376.57 |

In Table 1, the column "Original Time (s)" shows the original execution time of the programs from the benchmark suite. The column set "Slowdown" lists the slowdown attributable to the instrumentation phase (instrument), to the execution of the instrumented code ("Serial" and "Parallel" w.r.t. the serial and parallel version of our approach), always including the time spent in I/O. Total slowdown of a benchmark is the sum of its instrumentation slowdown and execution slowdown. The memory consumption is listed in the column set "Memory (MB)".

The time needed to instrument a target program is relatively low. Given that a program needs to be instrumented only once, this overhead can be neglected. Dynamic data-dependence profiling typically slows the program down by a factor ranging from 100x to 150x, where the serial approach has an average slowdown of 137x.

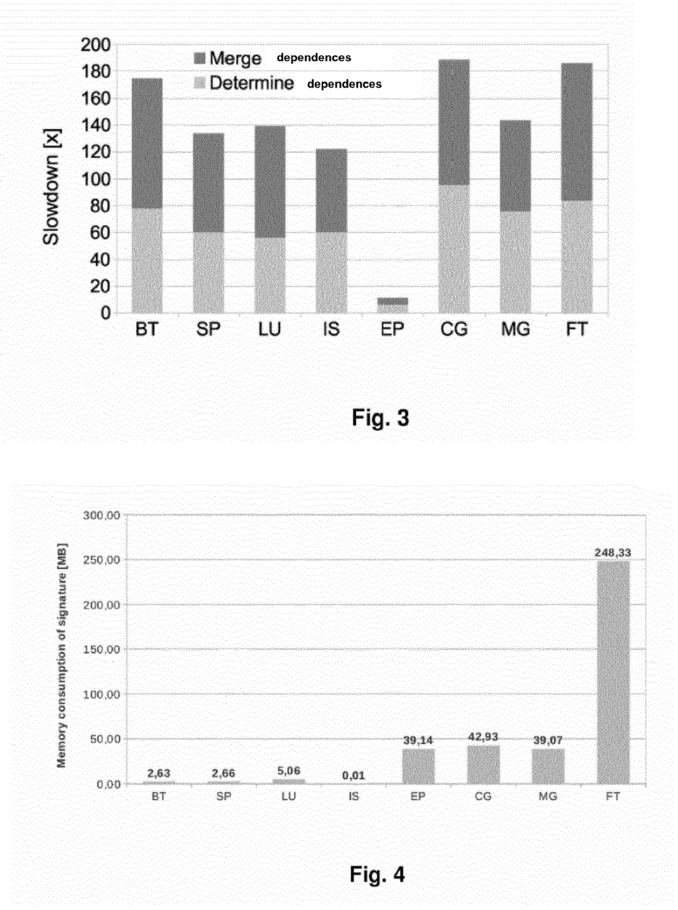

Fig. 3 presents a breakdown of the data-dependence analysis phase. About half (73x) of the time overhead is due to runtime dependence merging. However, it greatly reduces the time needed to write the result to the hard disk. Without dependence merging, it would not be uncommon to spend several hours writing since the dependence-file sizes can easily reach an order of several GB.

To capture the memory overhead, the value of "Maximum resident set size" is used from the time tool with the -v option specified. Memory consumption of the method when executed with NPB is listed in the column set "Memory (MB)" in Table 1. Apparently, the serial version consumes between 65.58 MB and 2.59 GB (memory consumption of the benchmarks themselves excluded), with an average of only 540 MB on NPB. The memory requirements are quite reasonable even for an ordinary computer, mainly because signatures are used instead of a traditional double-layer table as in classic shadow memory.

Fig. 4 shows the memory requirement of only the signature for the NAS Parallel Benchmarks by fixing EFPR = 1%. Depending on the number of variables the program has, the memory required for the signature varies from 0.01 MB to 248.33 MB, and most of the programs require no more than 45 MB. FT requires more than 200 MB due to the large number of variables in the program. However, according to Table 1, FT consumes 355.13 MB (serial version) in total, which is still adequate for an ordinary computer.

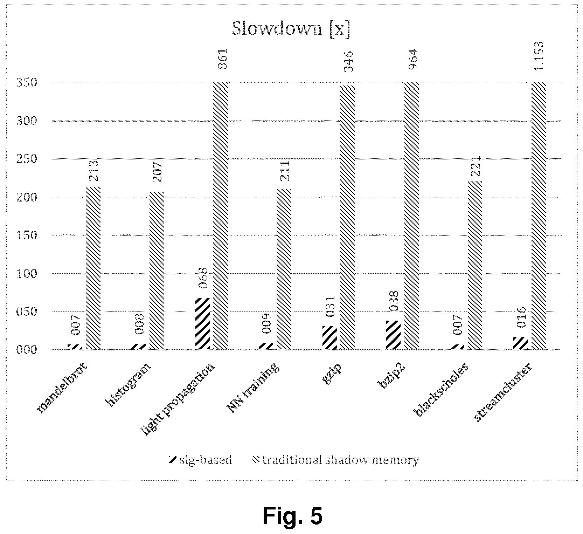

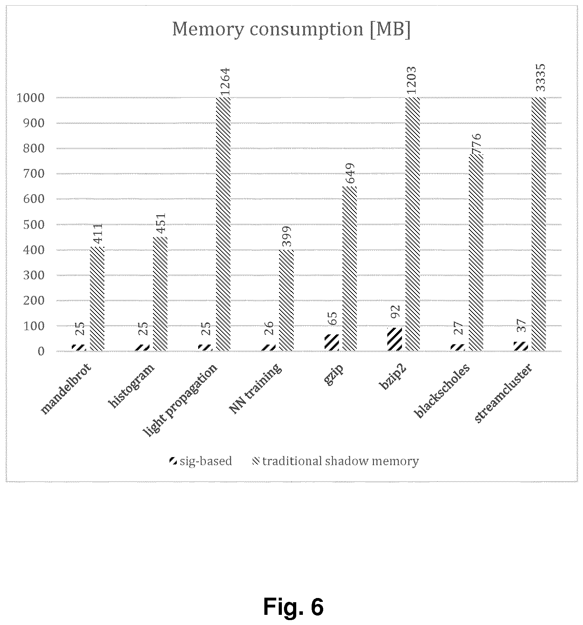

Fig. 5 and Fig. 6 show the time and memory overhead of the method in comparison to the traditional pair-wise approach, respectively. The traditional approach uses a pair-wise algorithm and a multi-layer table to record the status of each memory address. Traditional approach (Valgrind-based version) has a huge overhead in both time and memory. Thus it cannot profile NAS benchmarks. Test cases used in Fig.5 and Fig.6 are really small programs which can be profiled by the traditional approach. As it is shown in Fig. 6, the traditional approach has a 521x slowdown on average in the eight test cases, while our signature approach has an average slowdown of 23x, which is about 22.5x faster. Considering the 4x slowdown caused natively by Valgrind (the framework used to implement the traditional approach), the method using read signatures 120 and write signatures 110 is still 18.5 times faster. Furthermore, according to Fig. 6, the traditional approach consumes 1.04 GB memory on average, while the signature approach requires only about 40 MB.

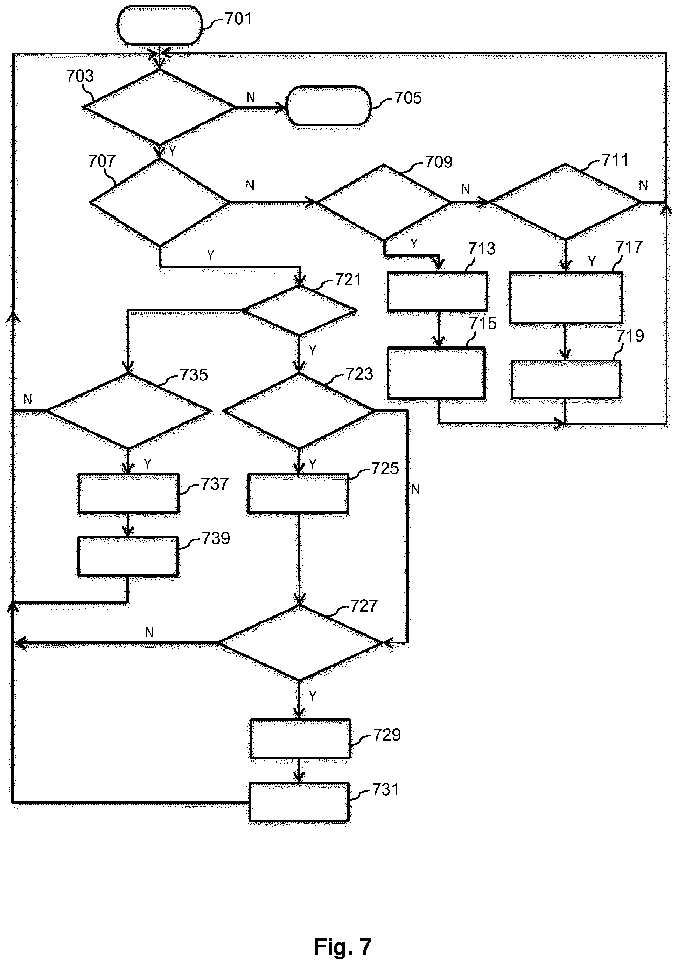

Fig. 7 shows a flowchart of the method of determining data dependences within a program. The program is started in step 701. In step 703 it is determined whether there is a next instruction. The analysis is terminated in step 705 if there is no further instruction. If there is a next instruction it is determined in step 707 whether the instruction comprises a memory access, meaning a read or write access.

If the instruction does not comprise a memory access in step 709 it is determined whether a new control region is entered, for example, by detecting a re-convergence point. If a new control region is entered the start of a new control region is recorded in step 713 and local variables which are assigned to the respective new control region are recorded in step 715 and the method proceeds with step 703.

If there is no new control region entered in step 709 it is checked in step 711 whether a control region is left. If no control region is left in step 711 the method proceeds with step 703.

If a control region is left all slots in the read signature 120 and the write signature 110 which are assigned to local variables of the control region which is left are reset in step 717, recording of data dependences is stopped in step 719 and the method proceeds with step 703.

If the instruction determined in step 707 comprises a memory access it is determined in step 721 whether the memory access is a write access.

In case of a write access it is checked in step 723 whether the read signature 120 comprises an entry in the slot assigned to the variable accessed by the write access. If there is an entry a write-after-read (WAR) dependence is built and the WAR and the line numbers of the program which are involved in the WAR are recorded in a triple in step 725 as discussed above and the method is continued with step 727.

If in step 723 it is detected there is no entry in the slot of the read signature 120 assigned to the variable accessed by the write access it is continued with step 727.

In step 727 it is checked whether the write signature 110 comprises an entry in the slot assigned to the variable accessed by the write access. If there is an entry a write-after-write (WAW) dependence is built and the WAW and the line numbers of the program which are involved in the WAW are recorded in a triple in step 729 as discussed above and the method proceeds with step 731. In step 731 the line number of the write access is stored in the assigned slot of the write signature 110 and the method is continued with step 703.

If in step 727 it is detected there is no entry in the slot of the write signature 110 assigned to the variable accessed by the write access it is continued with step 703.

If it is determined in step 721 that the memory access is no write access the method continues with step 735 because there has to be in this case a read access. In step 735 it is checked whether the write signature 110 comprises an entry in the slot assigned to the variable accessed by the read access. If there is an entry a read-after-write (RAW) dependence is built and the RAW and the line numbers of the program which are involved in the RAW are recorded in a triple in step 737 as discussed above and the method proceeds with step 739. In step 739 the line number of the read access is stored in the assigned slot of the read signature 120 and the method proceeds with step 703.

If it is determined in step 735 that the write signature 110 does not comprise an entry in the slot assigned to the variable accessed by the read access, the method proceeds with step 703.

The steps described in Fig. 7 have not necessarily to be traversed in the sequence described above in order to record the data dependences.

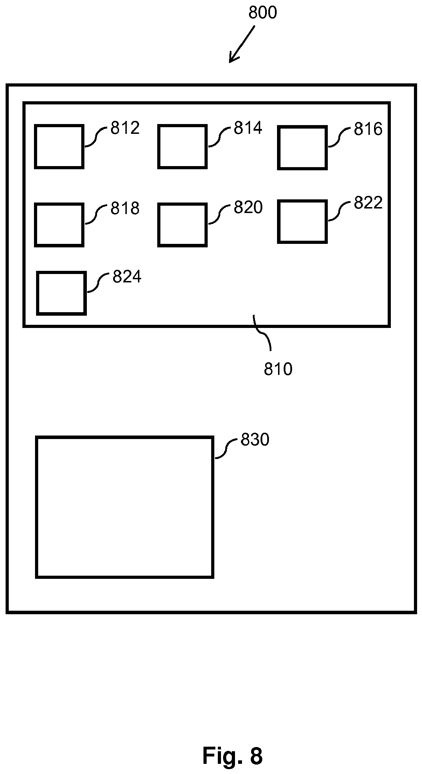

Fig. 8 shows a principal sketch of a data-dependence detection device 800 for detecting data dependences in a program. The data-dependence detection device comprises a processing device 810 and a memory device 830. The processing device 810 comprises a control-region detection device 812 being adapted to determine at least one control region within the program. The processing device 810 further comprises at least one execution device 814 being adapted to execute the program. The processing device 810 further comprises a dependence detector 816. The dependence detector 816 is adapted to detect a first variable within a first control region. The dependence detector 816 is further adapted to assign a first slot of a read signature 120 and a corresponding first slot of a write signature 110 to the first variable, wherein the read signature 120 and the write signature 110 are recorded in the memory device 830. The dependence detector 816 is further adapted to determine a first line number of a first program line of a first memory access of the program, wherein the first memory access being related to the first variable. The dependence detector 816 is further adapted to check whether the first memory access is a read operation or a write operation. The dependence detector 816 is further adapted to determine the type of data dependence based on records which are recorded in the first slot of the read signature 120 or the first slot of the write signature 110 and the result of the check of the first memory access. The processing device 810 comprises a recorder 818 being adapted to record in the memory device 830 whether the type of data dependence is a read-after-write dependence, write-after-read dependence or write-after-write dependence. The processing device further comprises an updater 820 being adapted to update the read signature or the write signature in accordance with the result of the check of the first memory access. The updated signatures are stored in the memory device 830. The processing device 810 further comprises an assignment detector 822, which is adapted to determine whether the first variable is a first local variable being assigned to the first control region. The processing device 810 further comprises a releasing device 824 which is adapted to release the first slot of the read signature and the corresponding first slot of the write signature assigned to the first variable if the first variable is the first local variable if an end of the first control region is passed during execution of the program.

To evaluate the quality of profiled dependences, the parallelism discovery tool "DiscoPoP" was applied to detect parallelizable loops in NAS Parallel Benchmarks (NPB) based on profiled dependences. Parallelism discovery requires high-quality data-dependence information to work properly, and already a single false dependence can lead to the opposite result for a code section. Thus, a high precision result of the parallelism discovery tool can prove the high quality of the data dependence.

Table 1: Detection of parallelizable loops in NAS Parallel Benchmarks.

| Program | # Executed Loops | # OMP Annotated | # Identified |
|---------|------------------|-----------------|--------------|
| BT | 184 | 30 | 30 |
| SP | 252 | 34 | 34 |
| LU | 173 | 33 | 33 |
| IS | 25 | 11 | 8 |
| EP | 10 | 1 | 1 |
| CG | 32 | 16 | 9 |
| MG | 74 | 14 | 14 |
| FT | 37 | 8 | 7 |
| Overall | 787 | 147 | 136 |

The purpose of this experiment is to see how the approximation in data dependence profiling affects the accuracy of the suggestions on parallelism. We searched for parallelizable loops in sequential NPB programs and compared the results with the parallel versions provided by NPB. Table 2 shows the results of the experiment. Column "# Executed Loops" lists the total number of loops which were actually executed. The second column shows the number of annotated loops in OpenMP versions of the programs ("# OMP Annotated"). Under "# Identified" it is listed how many annotated loops were identified as parallelizable by DiscoPoP. As shown in Table 2, DiscoPoP identified 92.5% (136/147) of the annotated loops, proving the effect of the signature approximation to be negligible.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

# EP 3 001 312 B1

**List of reference numerals:**

| | |
|---|---|
| 110 | write signature |
| 120 | read signature |
| 132, 134, 136, 138, 201, 202, 203 | memory access |
| 150 | disambiguation check |
| 160 | building dependence |
| 200 | executing target program |
| 205 | main thread |
| 210 | collecting memory accesses |
| 212 | chunk of memory accesses |
| 214 | pushing chunks in queue of corresponding sub-worker thread |
| 220 | worker thread |
| 222 | sub-worker thread |
| 224 | reporting dependences |
| 226 | local data structure |
| 230 | merging data |
| 240 | global data structure |
| 701 | starting grogram |
| 703 | detecting next instruction |
| 705 | terminating analysis |
| 707 | comprising instruction memory access |
| 709 | detecting new control region |
| 711 | detecting whether control region is left |
| 713 | recording start of control region |
| 715 | recording local variables |
| 717 | resetting local variables |
| 719 | stopping recording of control region which is left |
| 721 | detecting write access |
| 723 | checking of read signature |
| 725 | recording memory access |
| 727 | checking write signature |
| 729 | recording memory access |
| 731 | writing write signature |
| 735 | checking write signature |
| 737 | recording memory access |
| 739 | writing read signature |
| 800 | data-dependence detection device |
| 810 | processing device |
| 812 | control-region detection device |
| 814 | execution device |
| 816 | dependence detector |
| 818 | recorder |
| 820 | updater |
| 822 | assignment detector |
| 824 | releasing device |
| 830 | memory device |

## Claims

1. A method of determining at least one data dependence within a program, the method comprising the steps of:

- determining at least one control region within the program;
- executing the program;
- determining a type of data dependence by means of the steps of

◦ detecting a first variable within a first control region;

◦ assigning a first slot of a read signature (120) and a corresponding first slot of a write signature (110) to the first variable, wherein the signatures can be represented by an array and the slots are fields of the array and a hash function is used to map the memory address of the first variable to the slots;

◦ determining a first line number of a first program line of a first memory access (132, 134, 136, 138, 201, 202, 203) of the program, wherein the first memory access (132, 134, 136, 138, 201, 202, 203) being related to the first variable;

◦ checking whether the first memory access (132, 134, 136, 138, 201, 202, 203) is a read operation or a write operation for updating a record in case of a read operation in the assigned slot of the read signature (120) or in case of a write operation in the assigned slot of the write signature (110), including the first line number of the first program line of the memory access of the first variable;

◦ determining a data dependence , being a conflict if two or more operations accessing the same variable in a certain order, by checking the records being recorded in the first slot of the read signature (120) or the first slot of the write signature (110) and the result of the check of the first memory access (132, 134, 136, 138, 201, 202, 203);

- recording in a memory device (830) when determining a data dependence whether the type of data dependence is a read-after-write dependence, write-after-read dependence or write-after-write dependence and the line numbers of the program lines of the memory accesses for the determined data dependence;
- updating the read signature (120) or the write signature (110) with the record in accordance with the result of the check of the first memory access (132, 134, 136, 138, 201, 202, 203);
- determining whether the first variable is a first local variable being assigned to the first control region;
- releasing the first slot of the read signature (120) and the corresponding first slot of the write signature (110) assigned to the first variable if the first variable is the first local variable and if an end of the first control region is passed during execution of the program.

2. The method according to claim 1, wherein the steps of determine and recording the type of data dependence are performed by a worker thread (220), and the method comprises the steps of:

■ checking whether the write signature (110) comprises a record of a second line number in the first slot if the first memory access is a read operation;

■ writing a first information to a memory device if the first slot of the write signature (110) comprises the second line number, wherein the first information comprises information regarding the first line number, the second line number and that a read operation has been performed after a write operation;

■ writing the first line number in the first slot of the read signature (120) if the first memory access is a read operation;

■ checking whether the write signature (110) comprises a record of a third line number in the first slot if the first memory access is a write operation;

■ writing a second information to the memory device if the first slot of the write signature (110) comprises the third line number, wherein the second information comprising information regarding the first line number, the third line number and that a write operation has been performed after a write operation;

■ writing the first line number in the first slot of the write signature (110) if the first memory access is a write operation;

■ checking whether the read signature (120) comprises a record of a fourth line number in the first slot if the first memory access is a write operation;

■ writing a third information to the memory device if the first slot of the read signature (120) comprises the fourth line number, wherein the third information comprising information regarding the first line number, the fourth line number and that a write operation has been performed after a read operation;

■ writing the first line number in the first slot of the write signature (110) if the first memory access is a write operation.

3. The method according to any one of the preceding claims, wherein the method comprises the further steps of:

- checking if a fourth information is identical with one of the first information, second information or third information;
- discarding the fourth information if the fourth information is identical with one of the first information, second information or third information.

4. The method according to any one of the preceding claims, wherein the method comprises the additional step of:

   - determining a size of a read signature (120) and a size of write signature (110) based on a number of variables used within the program prior to the execution of the program.

5. The method according to any one of the preceding claims, wherein the method comprises the additional step of:

   - separating a main memory available for executing the program in at least a first sub-memory and a second sub-memory prior to the execution of the program.

6. The method according to claim 5 when depending on claim 2, wherein the worker thread (220) comprises at least a first sub-worker thread (222) assigned to the first sub-memory for evaluating memory accesses to the first sub-memory; and a second sub-worker thread (222) assigned to the second sub-memory for evaluating memory accesses to the second sub-memory.

7. The method according to claim 5 when depending on claim 2, wherein the method comprises the additional steps of:

   - storing by means of the worker thread (220) a memory access to the first sub-memory in a first memory chunk assigned to the first sub-memory during execution of the program; and
   - storing by means of the worker thread (220) a memory access to the second sub-memory in a second memory chunk assigned to the second sub-memory during execution of the program.

8. The method according to claim 7, wherein the worker thread (220) comprises at least a first sub-worker thread (222) assigned to the first sub-memory for evaluating memory accesses stored in the first chunk; and a second sub-worker thread (222) assigned to the second sub-memory for evaluating memory accesses stored in the second chunk.

9. The method according to claim 6 or 8, wherein the method comprises the additional steps of:

   - comparing fifth information written by the first sub-worker thread (222) with sixth information written by the second sub-worker thread (222);
   - deleting the sixth information written by the second sub-worker thread (222) if the sixth information written by the second sub-worker thread (222) is identical with the fifth information written by the first sub-worker thread (222).

10. The method according to any one of claims 6, 8 or 9, wherein the worker thread comprises $N \geq 2$ sub-worker threads (222), wherein the method comprises the additional step of:

    - determining a size of a read signature (120) and a size of write signature (110) assigned to a sub-worker thread (222) based on a number of variables used within the program and the number N of sub-worker threads (222) prior to the execution of the program.

11. A data-dependence detection device (800) for detecting data dependences in a program, the data-dependence detection device comprising at least one processing device (810) and at least one memory device (830), the processing device (810) comprising at least one control-region detection device (812) being adapted to determine at least one control region within the program, the processing device (810) comprising at least one execution device (814) being adapted to execute the program, the processing device comprising a dependence detector (816),

    - the dependence detector (816) being adapted to detect a first variable within a first control region,
    the dependence detector (816) being further adapted to assign a first slot of a read signature (120) and a corresponding first slot of a write signature (110) to the first variable, wherein the read signature (120) and the write signature (110) are recorded in the memory device (830) and wherein the signatures can be represented by an array and the slots are fields of the array and a hash function is used to map the memory address of the first variable to the slots, the dependence detector (816) being further adapted to determine a first line number of a first program line of a first memory access (132, 134, 136, 138, 201, 202, 203) of the program, wherein the first memory access (132, 134, 136, 138, 201, 202, 203) being related to the first variable,
    the dependence detector (816) being adapted to check whether the first memory access (132, 134, 136, 138, 201, 202, 203) is a read operation or a write operation for updating a record in case of a read operation in the assigned slot of the read signature (120) or in case of a write operation in the assigned slot of the write signature (110), including the first line number of the first program line of the memory access of the first variable, the dependence detector (816) being adapted to determine a data dependence , being a conflict if two or more operations accessing the same variable in a certain order, by checking the records being recorded in the first slot of the read signature (120) or the first slot of the write signature (110) and the result of the check of the first memory access (132, 134, 136, 138, 201, 202, 203),
- the processing device (810) comprising a recorder (818) being adapted to record in the memory device when determining a data dependence whether the type of data dependence is a read-after-write dependence , write-after-read dependence or write-after-write dependence and the line numbers of the program lines of the memory accesses for the determined data dependence, the processing device (810) comprising an updater (820) being adapted to update the read signature (120) or the write signature (110) in accordance with the result of the check of the first memory access(132, 134, 136, 138, 201, 202, 203), the processing device (810) comprising an assignment detector (822) being adapted to determine whether the first variable is a first local variable being assigned to the first control region, and the processing device (810) comprising a releasing (824) device being adapted to release the first slot of the read signature (120) and the corresponding first slot of the write signature (110) assigned to the first variable if the first variable is the first local variable and if an end of the first control region is passed during execution of the program.

12. The data-dependence detection device (800) of claim 11 comprising a worker thread (220), the worker thread (220) being adapted to perform the functions of the dependence detector (816) and the recorder (818), the worker thread (220)being adapted to:

- check whether the write signature (110) comprises a record of a second line number in the first slot if the first memory access (132, 134, 136, 138, 201, 202, 203) is a read operation;
- write a first information to the memory device (830) if the first slot of the write signature (110) comprises the second line number, wherein the first information comprising information regarding the first line number, the second line number and that a read operation has been performed after a write operation;
- write the first line number in the first slot of the read signature (120) if the first memory access (132, 134, 136, 138, 201, 202, 203) is a read operation;
- check whether the write signature (110) comprises a record of a third line number in the first slot if the first memory access is a write operation;
- write a second information to the memory device (830) if the first slot of the write signature (110) comprises the third line number, wherein the second information comprising information regarding the first line number, the third line number and that a write operation has been performed after a write operation;
- write the first line number in the first slot of the write signature (110) if the first memory access (132, 134, 136, 138, 201, 202, 203) is a write operation;
- check whether the read signature (120) comprises a record of a fourth line number in the first slot if the first memory access (132, 134, 136, 138, 201, 202, 203) is a write operation;
- write a third information to the memory device (830) if the first slot of the read signature (120) comprise the fourth line number, wherein the third information comprising information regarding the first line number, the fourth line number and that a write operation has been performed after a read operation;
- write the first line number in the first slot of the write signature (110) if the first memory access is a write operation.

13. A computer program product comprising code means for producing the steps of the method as claimed in any one of claims 1 to 10 when run on the data-dependence detection device of claim 11.

**Patentansprüche**

1. Verfahren zur Bestimmung mindestens einer Datenabhängigkeit innerhalb eines Programms, wobei das Verfahren die folgenden Schritte umfasst:

- Bestimmen mindestens eines Kontrollbereichs innerhalb des Programms;
- Ausführen des Programms;
- Bestimmung der Art der Datenabhängigkeit durch die Schritte

  ∘ Erkennen einer ersten Variablen innerhalb eines ersten Kontrollbereichs;

◦ Zuweisen eines ersten Slots einer Lesesignatur (120) und eines entsprechenden ersten Slots einer Schreibsignatur (110) zu der ersten Variablen, wobei die Signaturen durch ein Array dargestellt werden können und die Slots Felder des Arrays sind und eine Hash-Funktion verwendet wird, um die Speicheradresse der ersten Variablen den Slots zuzuordnen;

◦ Bestimmen einer ersten Zeilennummer einer ersten Programmzeile eines ersten Speicherzugriffs (132, 134, 136, 138, 201, 202, 203) des Programms, wobei der erste Speicherzugriff (132, 134, 136, 138, 201, 202, 203) auf die erste Variable bezogen ist;

◦ Prüfen, ob der erste Speicherzugriff (132, 134, 136, 138, 201, 202, 203) ein Lesevorgang oder ein Schreibvorgang zum Aktualisieren eines Datensatzes ist, bei einem Lesevorgang in dem zugeordneten Slot der Lesesignatur (120) oder bei einem Schreibvorgang in dem zugeordneten Slot der Schreibsignatur (110), einschließlich der ersten Zeilennummer der ersten Programmzeile des Speicherzugriffs der ersten Variablen;

◦ Bestimmen einer Datenabhängigkeit, die ein Konflikt darstellt, wenn zwei oder mehr Operationen auf dieselbe Variable in einer bestimmten Reihenfolge zugreifen, durch Prüfen der Datensätze, die in dem ersten Slot der Lesesignatur (120) oder dem ersten Slot der Schreibsignatur (110) aufgezeichnet sind, und des Ergebnisses der Prüfung des ersten Speicherzugriffs (132, 134, 136, 138, 201, 202, 203);

- Aufzeichnung in einer Speichereinrichtung (830), wenn eine Bestimmung einer Datenabhängigkeit erfolgte, ob die Art der Datenabhängigkeit eine Lesenach-Schreib-Schreib-nach-Lese- oder Schreib-nach-Schreib-Abhängigkeit ist, und die Zeilennummern der Programmzeilen der Speicherzugriffe für die ermittelte Datenabhängigkeit,

- Aktualisieren der Lesesignatur (120) oder der Schreibsignatur (110) mit dem Datensatz entsprechend dem Ergebnis der Prüfung des ersten Speicherzugriffs (132, 134, 136, 138, 201, 202, 203);

- Bestimmen, ob die erste Variable eine erste lokale Variable ist, die dem ersten Kontrollbereich zugewiesen wird;

- Freigabe des ersten Slots der gelesenen Signatur (120) und des entsprechenden ersten Slot der der ersten Variablen zugeordneten Schreibsignatur (110), wenn die erste Variable die erste lokale Variable ist und wenn während der Ausführung des Programms ein Ende des ersten Steuerbereichs passiert wird.

**2.** Verfahren nach Anspruch 1, wobei die Schritte der Bestimmung und Aufzeichnung der Art der Datenabhängigkeit durch einen Arbeits-Thread (220) durchgeführt werden und das Verfahren die Schritte umfasst:

▪ Prüfen, ob die Schreibsignatur (110) einen Satz einer zweiten Zeilennummer im ersten Slot enthält, wenn der erste Speicherzugriff ein Lesevorgang ist;

▪ Schreiben einer ersten Information in eine Speichervorrichtung, wenn der erste Slot der Schreibsignatur (110) die zweite Zeilennummer umfasst, wobei die erste Information Informationen bezüglich der ersten Zeilennummer, der zweiten Zeilennummer umfasst und dass eine Leseoperation nach einer Schreiboperation durchgeführt wurde;

▪ Schreiben der ersten Zeilennummer in den ersten Slot der Lesesignatur (120), wenn der erste Speicherzugriff ein Lesevorgang ist;

▪ Prüfen, ob die Schreibsignatur (110) einen Satz einer dritten Zeilennummer im ersten Slot enthält, wenn der erste Speicherzugriff eine Schreiboperation ist;

▪ Schreiben einer zweiten Information in die Speichervorrichtung, wenn der erste Slot der Schreibsignatur (110) die dritte Zeilennummer umfasst, wobei die zweite Information Informationen bezüglich der ersten Zeilennummer, der dritten Zeilennummer umfasst und dass eine Schreiboperation nach einer Schreiboperation durchgeführt worden ist;

▪ Schreiben der ersten Zeilennummer in den ersten Slot der Schreibsignatur (110), wenn der erste Speicherzugriff eine Schreiboperation ist;

▪ Prüfen, ob die Lesesignatur (120) einen Satz einer vierten Zeilennummer im ersten Slot enthält, wenn der erste Speicherzugriff eine Schreiboperation ist;

▪ Schreiben einer dritten Information in die Speichervorrichtung, wenn der erste Slot der Lesesignatur (120) die vierte Zeilennummer umfasst, wobei die dritte Information Informationen bezüglich der ersten Zeilennummer, der vierten Zeilennummer umfasst, und dass nach einem Lesevorgang eine Schreiboperation durchgeführt wurde;

▪ Schreiben der ersten Zeilennummer in den ersten Slot der Schreibsignatur (110), wenn der erste Speicherzugriff eine Schreiboperation ist.

**3.** Verfahren nach einem der vorstehenden Ansprüche, wobei das Verfahren die weiteren Schritte umfasst:

- Prüfung, ob eine vierte Information mit einer der ersten, zweiten oder dritten Informationen identisch ist;
- Verwerfen der vierten Information, wenn die vierte Information mit einer der ersten Informationen, der zweiten Information oder der dritten Information identisch ist.

4. Verfahren nach einem der vorstehenden Ansprüche, wobei das Verfahren den zusätzlichen Schritt umfasst;

- Bestimmen einer Größe einer Lesesignatur (120) und einer Größe einer Schreibsignatur (110) basierend auf einer Anzahl von Variablen, die innerhalb des Programms vor der Ausführung des Programms verwendet werden.

5. Verfahren nach einem der vorstehenden Ansprüche, wobei das Verfahren den zusätzlichen Schritt von:

- Trennung eines für die Ausführung des Programms verfügbaren Hauptspeichers in mindestens einen ersten Unterspeicher und einen zweiten Unterspeicher vor der Ausführung des Programms.

6. Verfahren nach Anspruch 5, wenn er von Anspruch 2 abhängt, wobei der Arbeits-Thread (220) mindestens einen ersten Unter-Arbeits-Thread (222) umfasst, der dem ersten Unterspeicher zugeordnet ist, um Speicherzugriffe auf den ersten Unterspeicher auszuwerten; und
Einen zweiten Unter-Arbeits-Thread (222), der dem zweiten Unterspeicher zugeordnet ist, um Speicherzugriffe auf den zweiten Unterspeicher auszuwerten.

7. Verfahren nach Anspruch 5, wenn es von Anspruch 2 abhängt, wobei das Verfahren die zusätzlichen Schritte umfasst:

- Speichern eines Speicherzugriffs auf den ersten Unterspeicher mittels des Arbeits-Threads (220) in einem ersten Speicherblocks, der dem ersten Unterspeicher während der Ausführung des Programms zugeordnet ist; und
- Speichern eines Speicherzugriffs auf den zweiten Unterspeicher mittels des Arbeits-Threads (220) in einem zweiten Speicherblocks, der dem zweiten Unterspeicher während der Programmausführung zugeordnet ist.

8. Verfahren nach Anspruch 7, wobei der Arbeits-Thread (220) mindestens einen ersten Unter-Arbeits-Thread (222) umfasst, der dem ersten Unterspeicher zugeordnet ist, um Speicherzugriffe, die in dem ersten Speicherblock gespeichert sind, auszuwerten; und einen zweiten Unter-Arbeits-Thread (222), der dem zweiten Unter-Speicher zugeordnet ist, um die im zweiten Speicherblock gespeicherten Speicherzugriffe auszuwerten.

9. Verfahren nach Anspruch 6 oder 8, wobei das Verfahren die zusätzlichen Schritte umfasst:

- Vergleichen der fünften Information, die durch den ersten Unter-Arbeits-Thread (222) geschrieben wurde, mit der sechsten Information, die durch den zweiten Unter-Arbeits-Thread (222) geschrieben wurde;
- Löschen der sechsten Information, die durch den zweiten Unter-Arbeits-Thread (222) geschrieben wurde, wenn die sechste Information, die durch den zweiten Unter-Arbeits-Thread (222) geschrieben wurde, mit der fünften Information, die durch den ersten Unter-Arbeits-Thread (222) geschrieben wurde, identisch ist.

10. Verfahren nach einem der Ansprüche 6, 8 oder 9, wobei der Arbeits-Thread N ≥ Unter-Arbeits-Threads (222) umfasst, wobei das Verfahren den zusätzlichen Schritt umfasst:

- Bestimmen einer Größe einer Lesesignatur (120) und einer Größe einer Schreibsignatur (110), die einem Unter-Arbeits-Thread (222) zugeordnet ist, basierend auf einer Anzahl von Variablen, die innerhalb des Programms verwendet werden, und der Anzahl N von Unter-Arbeits-Threads (222) vor der Ausführung des Programms.

11. Datenabhängigkeitserfassungsvorrichtung (800) zum Detektieren von Datenabhängigkeiten in einem Programm, wobei die Datenabhängigkeitserfassungsvorrichtung Folgendes umfasst:

Mindestens eine Verarbeitungseinrichtung (810) und mindestens eine Speichereinrichtung (830), wobei die Verarbeitungseinrichtung (810) mindestens eine Steuerbereichserfassungseinrichtung (812) aufweist, die geeignet ist, mindestens einen Steuerbereich innerhalb des Programms zu bestimmen, wobei die Verarbeitungseinrichtung (810) mindestens eine Ausführungseinrichtung (814) aufweist, die geeignet ist, das Programm auszuführen, wobei die Verarbeitungseinrichtung einen Abhängigkeitsdetektor (816) aufweist,

- Wobei der Abhängigkeitsdetektor (816) angepasst ist, um eine erste Variable innerhalb eines ersten Steuerbereichs zu erfassen,

der Abhängigkeitsdetektor (816) ferner angepasst ist, um der ersten Variablen einen ersten Slot einer Lesesignatur (120) und einen entsprechenden ersten Slot einer Schreibsignatur (110) zuzuweisen, wobei die Lesesignatur (120) und die Schreibsignatur (110) in der Speichervorrichtung (830) aufgezeichnet sind und wobei die Signaturen durch ein Array dargestellt werden können und die Slote Felder des Arrays sind und eine Hash-Funktion verwendet wird, um die Speicheradresse der ersten Variablen auf die Slots abzubilden,
der Abhängigkeitsdetektor (816) ferner angepasst ist, um eine erste Zeilennummer einer ersten Programmzeile eines ersten Speicherzugriffs (132, 134, 136, 138, 201, 202, 203) des Programms zu bestimmen, wobei der erste Speicherzugriff (132, 134, 136, 138, 138, 201, 202, 203) auf die erste Variable bezogen ist,
Der Abhängigkeitsdetektor (816) angepasst ist, um zu prüfen, ob der erste Speicherzugriff (132, 134, 136, 138, 201, 202, 203) ein Lesevorgang oder ein Schreibvorgang zum Aktualisieren eines Datensatzes ist, im Falle eines Lesevorgangs in dem zugeordneten Slot der Lesesignatur (120) oder im Falle eines Schreibvorgangs in dem zugeordneten Slot der Schreibsignatur (110) ist; einschließlich der ersten Zeilennummer der ersten Programmzeile des Speicherzugriffs der ersten Variablen,
Wobei der Abhängigkeitsdetektor (816) angepasst ist, um eine Datenabhängigkeit zu bestimmen, die ein Konflikt ist, wenn zwei oder mehr Operationen auf dieselbe Variable in einer bestimmten Reihenfolge zugreifen, indem die Datensätze in dem ersten Slot der Lesesignatur (120) oder dem ersten Slot der Schreibsignatur (110) und das Ergebnis der Prüfung des ersten Speicherzugriffs (132, 134, 136, 138, 201, 202, 203) überprüft werden,

- Wobei die Verarbeitungsvorrichtung (810) einen Aufzeichner (818) aufweist, der geeignet ist, in der Speichervorrichtung aufzuzeichnen, wenn eine Datenabhängigkeit bestimmt wird, ob die Art der Datenabhängigkeit eine Lese-nach-Schreib-Abhängigkeit, eine Schreib-nach-Lese-Abhängigkeit oder eine Schreib-nach-Schreib-Abhängigkeit ist, und die Zeilennummern der Programmzeilen der Speicherzugriffe für die bestimmte Datenabhängigkeit, die Verarbeitungsvorrichtung (810) einen Updater (820) umfasst, der angepasst ist, um die Lesesignatur (120) oder die Schreibsignatur (110) in Übereinstimmung mit dem Ergebnis der Prüfung des ersten Speicherzugriffs (132, 134, 136, 138, 201, 202, 203) zu aktualisieren,

Die Verarbeitungsvorrichtung (810) einen Zuweisungsdetektor (822) umfasst, der angepasst ist, um zu bestimmen, ob die erste Variable eine erste lokale Variable ist, die dem ersten Steuerbereich zugeordnet ist, und
Die Verarbeitungsvorrichtung (810) eine Freigabevorrichtung (824) umfasst, die angepasst ist, um den ersten Slot der Lesesignatur (120) und den entsprechenden ersten Slot der Schreibsignatur (110), der der ersten Variablen zugeordnet ist, freizugeben, wenn die erste Variable die erste lokale Variable ist und wenn ein Ende des ersten Steuerbereichs während der Ausführung des Programms passiert wird.

12. Datenabhängigkeitserfassungsvorrichtung (800) nach Anspruch 11 mit einem Arbeits-Thread (220), wobei der Arbeits-Thread (220) die Funktionen des Abhängigkeitsdetektors (816) und des Aufzeichners (818) erfüllen kann, wobei der Arbeits-Thread (220) angepasst ist:

- Prüfen, ob die Schreibsignatur (110) einen Satz einer zweiten Zeilennummer im ersten Slot enthält, wenn der erste Speicherzugriff (132, 134, 136, 138, 201, 202, 203) ein Lesevorgang ist;
- Eine erste Information in die Speichervorrichtung (830) schreiben, wenn der erste Slot der Schreibsignatur (110) die zweite Zeilennummer umfasst, wobei die erste Information Informationen bezüglich der ersten Zeilennummer und der zweiten Zeilennummer umfasst und dass nach einer Schreiboperation eine Leseoperation durchgeführt wurde;
- Die erste Zeilennummer in den ersten Slot der Lesesignatur (120) schreiben, wenn der erste Speicherzugriff (132, 134, 136, 138, 201, 202, 203) ein Lesevorgang ist;
- Prüfen, ob die Schreibsignatur (110) einen Satz einer dritten Zeilennummer im ersten Slot enthält, wenn der erste Speicherzugriff eine Schreiboperation ist;
- Eine zweite Information in die Speichervorrichtung (830) schreiben, wenn der erste Slot der Schreibsignatur (110) die dritte Zeilennummer umfasst, wobei die zweite Information Informationen umfasst, die Folgendes betreffen, die erste Zeilennummer, die dritte Zeilennummer und dass nach einer Schreiboperation eine Schreiboperation durchgeführt wurde;
- Die erste Zeilennummer in den ersten Slot der Schreibsignatur (110) schreiben, wenn der erste Speicherzugriff (132, 134, 136, 138, 201, 202, 203) eine Schreiboperation ist;

■ Prüfen, ob die Lesesignatur (120) einen Satz einer vierten Zeilennummer im ersten Slot enthält, wenn der erste Speicherzugriff (132, 134, 136, 138, 201, 202, 203) eine Schreiboperation ist;
■ Eine dritte Information in die Speichervorrichtung (830) schreiben, wenn der erste Slot der gelesenen Signatur (120) die vierte Zeilennummer umfasst, wobei die dritte Information Information Informationen bezüglich der ersten Zeilennummer, der vierten Zeilennummer umfasst und dass eine Schreiboperation nach einer Leseoperation durchgeführt wurde;
■ Die erste Zeilennummer in den ersten Slot der Schreibsignatur (110) schreiben, wenn der erste Speicherzugriff eine Schreiboperation ist.

**13.** Computerprogrammprodukt mit einer Codeeinrichtung zur Herstellung der Verfahrensschritte, wie sie in einem der Ansprüche 1 bis 10 beansprucht werden, wenn es auf der Datenabhängigkeitserfassungsvorrichtung nach Anspruch 11 ausgeführt wird.

**Revendications**

**1.** Un procédé de détermination d'au moins une dépendance de données dans un programme, le procédé comprenant les étapes consistant à:

- déterminer au moins une région de contrôle dans le programme;
- exécuter le programme;
- déterminer un type de dépendance de données au moyen des étapes consistant à:

  ◦ détecter une première variable dans une première région de contrôle;
  ◦ affecter un premier intervalle d'une signature de lecture (120) et un premier intervalle correspondant d'une signature d'écriture (110) à la première variable, dans lequel les signatures peuvent être représentées par une zone et les intervalles sont des champs de la zone et une fonction de hash est utilisée pour mapper l'adresser mémoire de la première variable aux intervalles;
  ◦ déterminer un premier numéro de ligne d'une première ligne de programme d'un premier accès en mémoire (132, 134, 136, 138, 201, 202, 203) du programme, dans lequel le premier accès en mémoire (132, 134, 136, 138, 201, 202, 203) sont liés à la première variable;
  ◦ vérifier si le premier accès à la mémoire (132, 134, 136, 138, 201, 202, 203) est une opération de lecture ou une opération d'écriture pour mettre à jour un enregistrement en cas d'une opération de lecture dans l'intervalle affecté à la signature de lecture (120) ou en cas d'une opération d'écriture, à l'intervalle affecté à la signature d'écriture (110), comprenant le premier numéro de ligne de la première ligne de programme de l'accès mémoire de la première variable;
  ◦ déterminer un type de dépendance de données, en conflit si deux ou plusieurs opérations accédant à la même variable dans un certain ordre, en vérifiant les enregistrements qui sont enregistrés dans le premier intervalle de la signature de lecture (120) ou dans le premier intervalle de la signature d'écriture (110) et le résultat de la vérification du premier accès mémoire (132, 134, 136, 138, 201, 202, 203);

- enregistrer dans un dispositif de mémoire (830) lors de la détermination d'un type de dépendance de données si le type de dépendance de données est une dépendance de lecture après écriture, une dépendance d'écriture après lecture, ou une dépendance d'écriture après écriture et les numéros de ligne des lignes de programme des accès mémoire pour les dépendances de données déterminées ;
- mettre à jour la signature de lecture (120) ou la signature d'écriture (110) avec l'enregistrement en fonction du résultat de la vérification du premier accès à la mémoire (132, 134, 136, 138, 201, 202, 203);
- déterminer si la première variable est une première variable locale affectée à la première région de contrôle;
- libérer le premier intervalle de la signature de lecture (120) et le premier intervalle correspondant de la signature d'écriture (110) affectée à la première variable si la première variable est la première variable locale et si une fin de la première région de contrôle est transmise pendant l'exécution du programme.

**2.** Le procédé selon la revendication 1, dans lequel les étapes de détermination et d'enregistrement du type de dépendance de données sont exécutées par un thread de travail (220), et le procédé comprend les étapes consistant à:

■ vérifier si la signature d'écriture (110) comprend un enregistrement du deuxième numéro de ligne dans le premier intervalle si le premier accès à la mémoire est une opération de lecture;
■ écrire une première information sur un dispositif de mémoire si le premier intervalle de la signature d'écriture (110) comprend le deuxième numéro de ligne, dans lequel la première information comprend une information concernant le premier numéro de ligne, le deuxième numéro de ligne et une opération de lecture après une opération d'écriture;

▪ écrire le premier numéro de ligne dans le premier intervalle de la signature de lecture (120) si le premier accès à la mémoire est une opération de lecture;

▪ vérifier si la signature d'écriture (110) comprend un enregistrement d'un troisième numéro de ligne dans le premier intervalle si le premier accès à la mémoire est une opération d'écriture;

▪ écrire une seconde information sur le dispositif de mémoire si le premier intervalle de la signature d'écriture (110) comprend le troisième numéro de ligne, dans lequel la seconde information comprend des informations concernant le premier numéro de ligne, le troisième numéro de ligne et une opération d'écriture après une opération d'écriture;

▪ écrire le premier numéro de ligne dans le premier intervalle de la signature d'écriture (110) si le premier accès à la mémoire est une opération d'écriture;

▪ vérifier si la signature de lecture (120) comprend un enregistrement d'un quatrième numéro de ligne dans le premier intervalle si le premier accès à la mémoire est une opération d'écriture;

▪ écrire une troisième information sur le dispositif de mémoire si le premier intervalle de la signature de lecture (120) comprend le quatrième numéro de ligne, dans lequel la troisième information comprend des informations concernant le premier numéro de ligne, le quatrième numéro de ligne et une opération d'écriture après une opération de lecture;

▪ écrire le premier numéro de ligne dans le premier intervalle de la signature d'écriture (110) si le premier accès à la mémoire est une opération d'écriture.

3. Le procédé selon l'une quelconque des revendications précédentes, dans lequel le procédé comprend les étapes supplémentaires consistant à:

    - vérifier si une quatrième information est identique à l'une des première, deuxième ou troisième informations;
    - supprimer la quatrième information si la quatrième information est identique à l'une des premières informations, à la deuxième information ou à la troisième information.

4. Le procédé selon l'une quelconque des revendications précédentes, dans lequel le procédé comprend l'étape supplémentaire consistant à:

    - déterminer une taille d'une signature de lecture (120) et une taille de signature d'écriture (110) sur la base d'un nombre de variables utilisées dans le programme. avant l'exécution du programme.

5. Le procédé selon l'une quelconque des revendications précédentes, dans lequel le procédé comprend l'étape supplémentaire consistant à:

    - séparer une mémoire principale disponible pour exécuter le programme dans au moins une première sous-mémoire et une seconde sous-mémoire avant l'exécution du programme.

6. Le procédé selon la revendication 5, selon la revendication 2, dans lequel le thread de travail (220) comprend au moins un premier sous-thread de travail (222) affecté à la première sous-mémoire pour évaluer les accès à la mémoire à la première sous-mémoire; et un second sous-thread de travail (222) affecté à la seconde sous-mémoire pour évaluer les accès à la mémoire à la seconde sous-mémoire.

7. Le procédé selon la revendication 5 lorsqu'il dépend de la revendication 2, dans lequel le procédé comprend les étapes supplémentaires consistant à:

    - stocker au moyen d'un thread de travail (220) un accès mémoire à la première sous-mémoire dans un premier bloc attribué au premier sous-ensemble durant l'exécution du programme ; et
    - enregistrer au moyen du thread de travail (220) un accès mémoire à la seconde sous-mémoire dans un second bloc affecté à la seconde sous-mémoire pendant l'exécution du programme.

8. Le procédé selon la revendication 7, dans lequel le thread de travail (220) comprend au moins un premier sous-thread de travail (222) affecté à la première sous-mémoire pour évaluer les accès à la mémoire stockés dans le premier bloc; et un second sous-thread de travail (222) affecté à la seconde sous-mémoire pour évaluer les accès à la mémoire stockés dans le deuxième bloc.

**9.** Le procédé selon la revendication 6 ou 8, dans lequel le procédé comprend les étapes supplémentaires consistant à:

- comparer une cinquième information écrite par le premier sous-thread de travail (222) à une sixième information écrite par le second sous-thread de travail (222);
- supprimer la sixième information écrite par le deuxième sous-thread de travail (222) si la sixième information écrite par le deuxième sous-thread de travail (222) est identique à la cinquième information écrite par le premier sous-thread de travail (222).

**10.** Le procédé selon l'une quelconque des revendications 6, 8 ou 9, dans lequel le thread de travail comprend N≥2 sous-thread de travail (222), dans lequel le procédé comprend l'étape supplémentaire consistant à:

- déterminer la taille d'une signature de lecture (120) et une taille de signature d'écriture (110) affectée à un sous-thread de travail (222) en fonction d'un nombre de variables utilisées dans le programme et du nombre N de sous-threads (222) avant l'exécution du programme.

**11.** Un dispositif de détection de dépendance de données (800) pour détecter des dépendances de données dans un programme, le dispositif de détection de dépendance de données comprenant au moins un dispositif de traitement (810) et au moins un dispositif de mémoire (830), le dispositif de traitement (810) comprenant au moins un dispositif de détection de région de contrôle (812) adapté pour déterminer au moins une région de contrôle dans le programme, le dispositif de traitement (810) comprenant au moins un dispositif d'exécution (814) adapté pour exécuter le programme, le dispositif de traitement comprenant détecteur de dépendance (816),

- le détecteur de dépendance (816) étant adapté pour détecter une première variable dans une première région de contrôle, le détecteur de dépendance (816) étant en outre adapté pour attribuer un premier intervalle d'une signature de lecture (120) et un premier intervalle correspondant d'une signature d'écriture (110) à la première variable, dans lequel la signature de lecture (120) et la signature d'écriture (110) sont enregistrées dans le dispositif de mémoire (830) et dans lequel les signatures peuvent être représentées par une zone et les intervalles sont les champs de la zone et une fonction de hash est utilisées pour mapper aux intervalles l'adresse mémoire à la première variable,
- le détecteur de dépendance (816) étant en outre adapté pour déterminer un premier numéro de ligne d'une première ligne de programme d'un premier accès à la mémoire (132, 134, 136, 138, 201, 202, 203) du programme, dans lequel le premier accès à la mémoire (132, 134, 136, 138, 201, 202, 203) est lié à la première variable, le détecteur de dépendance (816) étant adapté pour vérifier si le premier accès à la mémoire (132, 134, 136, 138, 201, 202, 203) est une opération de lecture ou une opération d'écriture pour mettre à jour un enregistrement dans le cas d'une opération de lecture dans l'intervalle assigné de la signature de lecture (120) ou, dans le cas d'une opération d'écriture dans l'intervalle assigné de la signature d'écriture (120), comprenant le premier numéro de ligne de la première ligne de programme de l'accès mémoire de la première variable,
- le détecteur de dépendance (816) étant adapté pour déterminer une dépendance de données qui est en conflits si deux ou plusieurs opérations accèdent à la même variable dans un certain ordre, en vérifiant les enregistrement qui sont enregistrés dans le premier intervalle de la signature de lecture (120) ou le premier intervalle de la signature d'écriture (110) et le résultat de la vérification du premier accès à la mémoire (132, 134, 136, 138, 201, 202, 203),
- le dispositif de traitement (810) comprenant un enregistreur (818) conçu pour enregistrer dans le dispositif de mémoire, lors de la détermination d'une dépendance de données, si le type de dépendance de données est une dépendance lecture après écriture, une dépendance d'écriture après lecture ou dépendance d'écriture après écriture et que les numéros de lignes des lignes de programmes des accès mémoire pour la dépendance de données déterminées,

le dispositif de traitement (810) comprenant un programme de mise à jour (820) adapté pour mettre à jour la signature de lecture (120) ou la signature d'écriture (110) en fonction du résultat de la vérification du premier accès à la mémoire (132, 134, 136, 138, 201, 202, 203), le dispositif de traitement (810) comprenant un détecteur d'affectation (822) adapté pour déterminer si la première variable est une première variable locale affectée à la première région de contrôle, et
le dispositif de traitement (810) comprenant un dispositif de libération (824) adapté pour libérer le premier intervalle de signature de lecture (120) et le premier intervalle correspondant de la signature d'écriture (110) affecté à la première variable si la première variable est la première variable locale si une fin de la première région de contrôle est passée pendant l'exécution du programme.

**12.** Le dispositif de détection de dépendance de données (800) de la revendication 11, comprenant un thread de travail (220), le thread de travail (220) étant adapté pour exécuter les fonctions du détecteur de dépendance (816) et de l'enregistreur (818), le thread de travail (220) étant adapté pour:

- vérifier si la signature d'écriture (110) comprend un enregistrement d'un deuxième numéro de ligne dans le premier intervalle si le premier accès à la mémoire (132, 134, 136, 138, 201, 202, 203) est une opération de lecture ;
- écrire une première information sur le dispositif de mémoire (830) si l'intervalle de la signature d'écriture (110) comprend le deuxième numéro de ligne, dans lequel la première information comprend une information concernant le premier numéro de ligne, le deuxième numéro de ligne et une opération de lecture a été effectuée après une opération d'écriture;
- écrire le premier numéro de ligne dans le premier intervalle de la signature de lecture (120) si le premier accès à la mémoire (132, 134, 136, 138, 201, 202, 203) est une opération de lecture;
- vérifier si la signature d'écriture (110) comprend un enregistrement d'un troisième numéro de ligne dans le premier intervalle si le premier accès à la mémoire est une opération d'écriture;
- écrire une seconde information sur le dispositif de mémoire (830) si le premier intervalle de la signature d'écriture (110) comprend le troisième numéro de ligne, la seconde information comprenant des informations concernant le premier numéro de ligne, le troisième numéro de ligne et une opération d'écriture a été effectuée après une opération d'écriture;
- écrire le premier numéro de ligne dans le premier intervalle de la signature d'écriture (110) si le premier accès à la mémoire (132, 134, 136, 138, 201, 202, 203) est une opération d'écriture;
- vérifier si la signature de lecture (120) comprend un enregistrement d'un quatrième numéro de ligne dans le premier intervalle si le premier accès à la mémoire (132, 134, 136, 138, 201, 202, 203) est une opération d'écriture;
- écrire une troisième information sur le dispositif de mémoire (830) si le premier intervalle de la signature de lecture (120) comprend le quatrième numéro de ligne, la troisième information comprenant des informations sur le premier numéro de ligne, le quatrième numéro de ligne et une opération d'écriture a été effectuée après une opération de lecture;
- écrire le premier numéro de ligne dans le premier intervalle de la signature d'écriture (110) si le premier accès à la mémoire est une opération d'écriture.

**13.** Un programme informatique comprenant du code informatiques pour mettre en oeuvre les étapes du procédé tel que revendiqué dans l'une quelconque des revendications 1 à 10 lorsqu'il est exécuté sur le dispositif de détection de dépendance de données de la revendication 11.

| 0 | 0 | 0 | 0 |
| 0 | 0 | 0 | a |
| 0 | 0 | d | a |

… 
a. Write 3 
… 
b. Read 2 
… 
c. Read 1 
… 
d. Write 2 
…

| 0 | 0 | 0 | 0 |
| 0 | 0 | b | 0 |
| 0 | c | b | 0 |

**Fig. 1**

**Fig. 2**

Fig. 3

Fig. 4

**Fig. 5**

Fig. 6

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13179316 A

**Non-patent literature cited in the description**

- **ZHEN LL et al.** Discovery of Potential Parallelism in Sequential Programs. *42"d International Conference on Parallel Processing,* ISBN 978-0-76-955117-3, 1004-1013
- **HYOYOUNG KIM et al.** CUBIT: Compact Bitmap Profling for Dynamic Data Dependence Analysis. *PROCEEDINGS OF THE 2013 RESEARCH IN ADAPTIVE AND CONVERGENT SYSTEMS ON, RACS,* 01 October 2013, vol. 13, ISBN 978-1-45-032348-2, 63-68
- **HONGTAO YU et al.** Multi-slicing: a compiler-supported parallel approach to data dependence profiling. *PROCEEDINGS OF THE 2012 INTERNATIONAL SYMPOSIUM ON SOFTWARE TESTING AND ANALYSIS, ISSTA 2012,* 15 July 2012, ISBN 978-1-45-031454-1, 23-33